# EUROPÄISCHE PATENTSCHRIFT

(11) **EP 0 711 798 B1**
(45) Veröffentlichungstag und Bekanntmachung des Hinweises auf die Patenterteilung: **10.03.1999**
(21) Anmeldenummer: 95117234.5
(22) Anmeldetag: 02.11.1995
(51) Int. Cl.: C08J 9/14

(54) **Verfahren zur Herstellung von zelligen Polyurethanen**
Process for the preparation of cellular polyurethanes
Procédé de préparation de polyuréthanes cellulaires

(30) Priorität: 10.11.1994 DE 4440212
(43) Veröffentlichungstag der Anmeldung: 15.05.1996
(73) Patentinhaber: BASF SCHWARZHEIDE GmbH, 01987 Schwarzheide (DE)
(72) Erfinder: Hendreich, Regina, D-01945 Frauendorf (DE); Falke, Peter, Dr., D-01987 Schwarzheide (DE); Tintelnot, Dieter, D-49356 Diepholz (DE); Wenzel, Marion, D-67071 Ludwigshafen (DE)
(74) Vertreter: Karau, Wolfgang, Dr.

(56) Entgegenhaltungen:
- DE-A- 4 203 754
- DE-A- 4 301 221
- FR-A- 1 289 753
- PATENT ABSTRACTS OF JAPAN vol. 950 no. 004 & JP-A-07 102105 (TOHO CHEM IND CO LTD) 18.April 1995,

## Beschreibung

Die Erfindung betrifft ein Verfahren zur Herstellung von zelligen Polyurethanen, insbesondere von Polyurethanformkörpern mit verdichteter Randzone und zelligem Kern, sogenannten Integralschaumstoffen, und Polyurethan-Weichschaumstoffen.

Diese Schaumstoffe sind seit langem bekannt und werden vielfach verwendet, Polyurethan-Integralschaumstoffe z.B. als Schuhsohlen oder als Sicherheit steile in Kraftfahrzeugen, Polyurethan-Weichschaumstoffe insbesondere als Polsterung im Möbel- oder Automobilbereich.

Ihre Herstellung erfolgt zumeist durch Umsetzung von organischen Polyisocyanaten und/oder modifizierten organischen Polyisocyanaten mit höherfunktionellen Verbindungen mit mindestens zwei reaktiven Wasserstoffatomen, beispielsweise Polyoxyalkylenpolyaminen und/oder vorzugsweise organischen Polyhydroxylverbindungen insbesondere Polyetherolen mit Molekulargewichten von z.B. 300 bis 10000, und gegebenenfalls Kettenverlängerungs- und/oder Vernetzungsmitteln mit Molekulargewichten bis ca. 400 in Gegenwart von Katalysatoren, Treibmitteln, Hilfsmitteln und/oder Zusatzstoffen und wurde vielfach beschrieben. Eine zusammenfassende Übersicht über die Herstellung von Polyurethanintegralschaumstoffen (Formkörpern mit verdichteter Randzone und zelligem Kern) wird z.B. im Kunststoff-Handbuch, Band VII, "Polyurethane", 1. Auflage 1966, herausgegeben von Dr. R. Vieweg und Dr. A. Höchtlen und 2. Auflage, 1983, herausgegeben von Dr. G. Oertel (Carl Hanser Verlag, München), sowie in "Integralschaumstoffe" von Dr. H. Piechota und Dr. H. Röhr, Carl-Hanser-Verlag, München, Wien, 1975 gegeben. Ebenso werden derartige Prozesse beschrieben in der DE-A-16 94 138 (GB 1 209 243), DE-C-1 955 891 (GB 1 321 679) und der DE-B-1 769 886 (US 3 824 199).

Als Treibmittel wurden in der Vergangenheit zumeist Fluorchlorkohlenwasserstoffe eingesetzt. Da diese Verbindungen jedoch die Ozonschicht abbauen, muß auf ihren Einsatz als Treibmittel für Polyurethanschaumstoffe verzichtet werden. Als Alternative wurden verschiedene Lösungen vorgeschlagen. So wird in DE-A-42 10 404 der Einsatz teilhalogenierter Kohlenwasserstoffe, sogenannter HFCKW bzw. HFKW, als Treibmittel für Polyurethanschaumstoffe beschrieben. Derartige Verbindungen haben zwar eine geringere ozonschädigende Wirkung als Fluorchlorkohlenwasserstoffe, gelten jedoch ebenfalls als ökologisch bedenklich und müssen substituiert werden.

In US-A-5 210 103 wird die Verwendung von flüchtigen Silikonen und Wasser als Treibmittel für Polyurethan-Integralschäume vorgeschlagen. In DE-A-25 44 560 wird eine Treibmittelmischung für Polyurethan-Integralschäume beschrieben, die HFCKW, Aceton und Diethylether enthält.

US-A-5 283 003 beschreibt eine Treibmittelkombination für Polyurethan-Schäume, die aus Methylenchlorid, Methylformiat und Pentan besteht.

In US-A-5 189 074 und 5 075 346 wird der Einsatz von Tertiärbutylmethylether als Treibmittel für Polyurethanschäume beschrieben, wobei der Ether auch über ein Polymerisat in die Reaktionsmischung eingebracht werden kann.

In TEDA und TOYOCAT NEWS, 1994 June, Vol 1, wird der Einsatz von 1,3-Dioxolan als Treibmittel für Polyurethan-Hartschaumstoffe beschrieben.

Alle diese haben jedoch Nachteile. So ist bei Treibmitteln, die unter Kohlendioxidabspaltung wirken, die Qualität der Randzone oft mangelhaft, und es kommt zu einer unerwünschten Porenbildung. Bei brennbaren Treibmitteln, insbesondere bei Pentan, müssen bei der Schaumherstellung aufwendige Sicherheitsvorkehrungen getroffen werden.

Die Aufgabe der Erfindung bestand darin, ein Treibmittel für zellige Polyurethane, insbesondere Polyurethan-Weichschaumstoffe und Polyurethan-Integralschaumstoffe, zu finden, das die Umwelt nicht schädigt, problemlos bei Beachtung üblicher Sicherheitsvorkehrungen handhabbar ist und zu Polyurethan-Schaumstoffen mit guter Qualität, bei Polyurethan-Integralschaumstoffen insbesondere zu Formkörpern mit einer gleichmäßigen Oberfläche führt. Die Aufgabe wurde überraschenderweise gelöst durch die Verwendung von Acetalen als Treibmittel für zellige Polyurethane.

Gegenstand der Erfindung ist demzufolge ein Verfahren zur Herstellung von zelligen Polyurethanen durch Umsetzung von
a) mindestens einem organischen und/oder modifizierten Polyisocyanat,
b) mindestens einer höhermolekularen Verbindung mit mindestens zwei reaktiven Wasserstoffatomen und einem Molekulargewicht von 300 bis 10000, gegebenenfalls
c) niedermolekularen Kettenverlängerungs- und/oder Vernetzungsmitteln mit einem Molekulargewicht von 60 bis 300
in Gegenwart von
d) Treibmitteln,
e) Katalysatoren sowie gegebenenfalls
f) Hilfsmitteln und/oder Zusatzstoffen,
dadurch gekennzeichnet, daß als Treibmittel d) mindestens ein Acetal verwendet wird.

Besondere Vorteile bringt die erfindungsgemäße Verwendung von Acetalen als Treibmittel bei der Herstellung von Polyurethan-Integralschaumstoffen, also Polyurethanschaumstoffen mit verdichteter Randzone und zelligem Kern, und Polyurethan-Weichschaumstoffen.

Gegenstand der Erfindung ist demzufolge insbesondere ein Verfahren zur Herstellung von Polyurethan-Integralschaumstoffen durch Umsetzung von
a) mindestens einem organischen und/oder modifizierten organischen Polyisocyanat,
b) mindestens einer höhermolekularen Verbindung mit mindestens zwei reaktiven Wasserstoffatomen und einem Molekulargewicht von 300 bis 10000 und gegebenenfalls
c) niedermolekularen Kettenverlängerungs- und/oder Vernetzungsmitteln mit einem Molekulargewicht von 60 bis 100
in Gegenwart von
d) Treibmitteln
e) Katalysatoren sowie gegebenenfalls
f) üblichen Hilfsmitteln und/oder Zusatzstoffen
in einem geschlossenen Formwerkzeug unter Verdichtung, dadurch gekennzeichnet, daß als Treibmittel (d) Acetale, gegebenenfalls in Kombination mit anderen Treibmitteln, eingesetzt werden. Eingesetzt werden Acetale mit einem Siedepunkt im Bereich von 40 bis 140°C, vorzugsweise von 40 bis 120°C, insbesondere von 40 bis 90°C.

Gegenstand der Erfindung ist weiterhin ein Verfahren zur Herstellung von Polyurethan-Weichschaumstoffen durch Umsetzung von
a) mindestens einem organischen und/oder modifizierten Polyisocyanat,
b) mindestens einer höhermolekularen Verbindung mit mindestens zwei reaktiven Wasserstoffatomen und einem Molekulargewicht von 300 bis 10000, gegebenenfalls
c) niedermolekularen Kettenverlängerungs- und/oder Vernetzungsmitteln mit einem Molekulargewicht von 60 bis 100.
in Gegenwart von
d) Treibmitteln,
e) Katalysatoren sowie gegebenenfalls
f) Hilfsmitteln und/oder Zusatzstoffen,
dadurch gekennzeichnet, daß als Treibmittel d) ebenfalls mindestens ein Acetal, wie oben beschrieben, verwendet wird.

Für das erfindungsgemäße Verfahren ist insbesondere Methylal geeignet, andere bevorzugte Vertreter sind Dimethoxyethan, Diethoxymethan, Diethoxyethan, 1,3-Dioxolan oder 2-Methyl-1,3-dioxolan. Die Acetale können allein, im Gemisch untereinander oder auch gemeinsam mit üblichen Treibmitteln eingesetzt werden.

Der Einsatz der Acetale erfolgt insbesondere in einer Menge von 0,1 bis 30 Gew.-%, bezogen auf das Gewicht der Komponenten a) bis f). Für Polyurethan-Integralschäume werden die Acetale vorzugsweise in einer Menge von 0,2 bis 8 Gew.-% eingesetzt. Für die Herstellung der Polyurethan-Weichschaumstoffe werden die Acetale vorzugsweise in einer Menge von 0,2 bis 15 Gew.-% eingesetzt. Es ist möglich, die Acetale allein, im Gemisch untereinander oder auch im Gemisch mit anderen, in der Polyurethanchemie üblichen Treibmitteln zu verwenden.

Gemeinsam mit den Acetalen können beispielsweise Wasser, aliphatische und/oder cycloaliphatische Kohlenwasserstoffe oder teilhalogenierte Kohlenwasserstoffe als Treibmittel eingesetzt werden.

Vorzugsweise eingesetzt werden Gemische aus 0,1 bis 20 Gew.-% mindestens eines Acetals und 0,1 bis 5 Gew.-% Wasser, Gemische aus 0,1 bis 20 Gew.-% mindestens eines Acetals und 0,1 bis 15 Gew.-% mindestens eines aliphatischen und/oder cycloaliphatischen Kohlenwasserstoffs, oder Gemische aus 0,1 bis 20 Gew.-% mindestens eines Acetals und 0,1 bis 15 Gew.-% mindestens eines teilhalogenierten Kohlenwasserstoffs. Die Gew.-% beziehen sich jeweils wieder auf das Gesamtgewicht der Komponenten a) bis f). Bei Verwendung von Wasser als Cotreibmittel muß der in den Polyolen üblicherweise vorhandene Wassergehalt mit berücksichtigt werden.

Für spezielle Anwendungsgebiete, beispielsweise für Polyurethan-Weichschäume niedriger Dichte, können auch höhere Mengen an Treibmittel eingesetzt werden. Hierbei sind jedoch Vorkehrungen zu treffen, die eine Bildung zündfähiger Gemische ausschließen.

Üblicherweise wird das Treibmittel beziehungsweise die Treibmittelmischung der Polyolkomponente zugesetzt, für bestimmte Einsatzfälle kann der Zusatz jedoch auch zur Isocyanatkomponente erfolgen.

Zu den für das erfindungsgemäße Verfahren verwendeten Ausgangskomponenten ist folgendes zu sagen:
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecandiisocyanat, 2-Ethyltetramethylendiisocyanat-1,4,2-Methylpentamethylen-diisocyanat-1,5, Tetramethylendiisocyanat-1,4 und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4' - und 2,4'-Diphenylmethandiisocyanatmischungen, oder modifiziertes Roh-MDI oder 2,4- bzw. 2,6-Toluylendiisocyanat, wobei die Di- bzw. Polyoxyalkylenglykole einzeln oder als Gemische eingesetzt werden können, beispielsweise genannt seien: Diethylen-, Dipropylenglykol, Polyoxyethylen-, Polyoxypropylen- und Polyoxypropylenpolyoxyethylenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat.
   Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gegebenenfalls gemischt werden.
   Besonders bewährt haben sich als organische Polyisocyanate und kommen daher vorzugsweise zur Anwendung bei der Herstellung von zelligen Elastomeren: NCO-Gruppen enthaltende Prepolymere mit einem NCO-Gehalt von 25 bis 9 Gew.-%, insbesondere auf Basis von Polyether- oder Polyesterpolyolen und einem oder mehreren Diphenylmethandiisocyanatisomeren, vorteilhafterweise 4,4'-Diphenlymethandiisocyanat und/oder modifizierten Urethangruppen enthaltende organische Polyisocyanate mit einem NCO-Gehalt von 33,6 bis 15 Gew.-%, insbesondere auf Basis von 4,4'-Diphenylmethandiisocyanat oder Diphenylmethandiisocyanatisomerengemischen, zur Herstellung von flexiblen Polyurethanschaumstoffen: Mischungen aus 2,4- und 2,6-Toluylendiisocyanaten, Mischungen aus Toluylendiisocyanaten und Polyphenylpolymethylenpolyisocyanat oder insbesondere Mischungen aus den vorgenannten Prepolymeren auf Basis von Diphenylmethandiisocyanatisomeren und Roh-MDI (Polyphenylpolymethylenpolyisocyanat) mit einem Diphenylmethandiisocyanat-Isomerengehalt von 30 bis 80 Gew.-%.
b) Als höhermolekulare Verbindungen mit mindestens 2 reaktiven Wasserstoffatomen werden zweckmäßigerweise solche mit einer Funktionalität von 2 bis 8, vorzugsweise 2 bis 4, und einem Molekulargewicht von 300 bis 10000, vorzugsweise von 1000 bis 6000 verwendet. Bewährt haben sich z.B. Polyetherpolyamine und/oder vorzugsweise Polyole, ausgewählt aus der Gruppe der Polyetherpolyole, Polyesterpolyole, Polythioetherpolyole, Polyesteramide, hydroxylgruppenhaltige Polyacetale und hydroxylgruppenhaltige aliphatische Polycarbonate oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 20 bis 120 und vorzugsweise 27 bis 60.
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydriden eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2-bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. E-Caprolacton oder Hydroxycarbonsäuren, z.B. ω-Hydroxycapronsäure.
   Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorteilhafterweise kleiner als 10, vorzugsweise kleiner als 2 ist, polykondensiert werden. Nach einer bevorzugten Ausführungsform wird als Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar (50 kPa), vorzugsweise 50 bis 150 mbar (5 bis 15 kPa), polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyesterpolyole besitzen vorzugsweise eine Funktionalität von 2 bis 4, insbesondere 2 bis 3, und ein Molekulargewicht von 480 bis 3000, vorzugsweise 1000 bis 3000.
   Insbesondere als Polyole verwendet werden jedoch Polyetherpolyole, die nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 4 reaktive Wasserstoffatome gebunden enthält, oder durch kationische Polymerisation mit Lewissäuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren wie Bernsteinsäure, Adipinsäure, Phthalsäure und Terephthalsäure, aliphatische und aromatische, gegebenenfalls N-mono-N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2- 1,3- 1,4-, 1,5- und 1,6-Hexamethylendiamin, Phenylendiamin, 2,3-, 2,4- und 2,6-Toluylendiamin, und 4,4'-, 2,4'- und 2,2'-Diaminodiphenylmethan.
   Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl und N-Ethyldiethanolamin, und Trialkanolamine, wie z.B. Triethanolamin und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol; Butandiol-1,4- Hexandiol-1,6, Glycerin, Trimethylolpropan und Pentaerythrit.
   Die Polyetherpolyole, vorzugsweise Polyoxypropylen- und Polyoxypropylenpolyoxyethylenpolyole, besitzen eine Funktionalität von vorzugsweise 2 bis 4 und Molekulargewichte von 300 bis 10000, vorzugsweise 1000 bis 6000 und insbesondere 1500 bis 5000 und geeignete Polyoxytetramethylenglykole ein Molekulargewicht bis ungefähr 3500.
   Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyetherpolyolen analog den Angaben der deutschen Patentschriften 11 11 394, 12 22 669 (US 3 304 273, 3 383 351, 3 523 093), 1 152 536 (GB 1 040 452) und 1 152 537 (GB 987 618) hergestellt werden, sowie Polyetherpolyol-dispersionen, die als disperse Phase, üblicherweise in einer Menge von 1 bis 50 Gew.-%, vorzugsweise 2 bis 25 Gew.-% enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyetherpolyole können ebenso wie die Polyesterpolyole einzeln oder in Form von Mischungen verwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.
   Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).
c) Die zelligen Polyurethane können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Zur Herstellung von zelligen Elastomerformkörpern und Integralschaumstoffen können außer den oben genannten Diolen und/oder Triolen oder im Gemisch mit diesen als Kettenverlängerungs- oder Vernetzungsmittel auch sekundäre aromatische Diamine, primäre aromatische Diamine, 3,3'-di- und/oder 3,3',5,5'-tetraalkylsubstituierte Diaminodiphenylmethane Anwendung finden.
   Als sekundäre aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Di-sek.-pentyl-, N,N'-Di-sek-hexyl-, N,N'-Di-sek-decyl-, N,N'-Dicyclohexyl-p- bzw. -m-phenylendiamin, N,N'-Dimethyl-, N,N'-Diethyl, N,N'-Diisopropyl-, N,N'-Di-sek-butyl-, N,N'-Dicyclohexyl-4,4'-diaminodiphenylmethan und N, N' -Di-sek-butyl-benzidin.
d) Erfindungsgemäß finden als Treibmittel (d), wie oben beschrieben, Acetale Verwendung, die einzeln, im Gemisch untereinander oder in Gemischen mit anderen Cotreibmitteln eingesetzt werden können.
e) Als Katalysatoren zur Herstellung von zelligen Polyurethanen werden insbesondere Verbindungen verwendet, die die Reaktion der reaktiven Wasserstoffatome, insbesondere Hydroxylgruppen enthaltende Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Azabicyclo-(3,3,0)-octan und vorzugsweise 1,4-Diazabicyclo-(2,2,2)-octan, und Alkanolverbindungen, wie Triethanolamin, Triisopropanolamin, N-Methyl- und N-Ethyldiethanolamin und Dimethylethanolamin.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombinationen, bezogen auf das Gewicht der Aufbaukomponente (b).
f) Der Reaktionsmischung zur Herstellung der zelligen Polyurethane können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen. Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate, oder von Fettsäuren sowie Salzen von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopolysiloxane, oxethylierte Alkylphenole, oxethylierte Fettalkohole, Paraffinöle, Ricinusöl-, bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b-f) angewandt.
   Als geeignete Trennmittel seien beispielsweise genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie z.B. Carbonsäureester und/oder -amide, hergestellt durch Veresterung oder Amidierung einer Mischung aus Montansäure und mindestens difunktionellen Alkanolaminen, Polyolen und/oder Polyaminen mit einem Molekulargewicht von 60 bis 400 (EP-A-153 639) oder Gemischen aus organischen Aminen, Metallsalzen der Stearinsäure und organischen Mono- und/oder Dicarbonsäuren oder deren Anhydriden (DE-A-36 07 447).
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Ampibole, Chrisotil, Talkum; Metalloxide, wie Kaolin, Aluminiumoxide, Titanoxide und Eisenoxide, Metallsalze, wie Kreide, Schwerspat und anorganische Pigmente, wie Cadmiumsulfid, Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern und auf der Grundlage von aromatischen und/oder aliphatischen Dicarbonsäureestern und insbesondere Kohlenstoffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (b-f), einverleibt.
   Geeignete Flammschutzmittel sind beispielsweise Trikresylphosphat, Tris-(2-chlorethyl)phosphat, Tris-(2-chlorpropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.
   Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Im allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Aufbaukomponente (b-f) zu verwenden.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoffhandbuch, Polyurethane, Band VII, Hanser-Verlag München, Wien, 1. und 2. Auflage, 1966 und 1983 zu entnehmen.

Zur Herstellung der zelligen Polyurethane werden die organischen Polyisocyanate (a), höhermolekularen Verbindungen mit mindestens zwei reaktiven Wasserstoffatomen (b) und gegebenenfalls Kettenverlängerungs- und/oder Vernetzungsmitteln (c) in solchen Mengen zur Umsetzung gebracht, daß das Äquivalenzverhältnis von NCO-Gruppen der Polyisocyanate (a) zur Summe der reaktiven Wasserstoffatome der Komponente (b) und gegebenenfalls (c) sowie, bei Verwendung von Wasser als Treibmittel, auch des Wassers 0,85 bis 1,25:1, vorzugsweise 0,95 bis 1,15:1 und insbesondere 1 bis 1,05:1, beträgt. Falls die Polyurethanintegralschaumstoffe zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 20:1, vorzugsweise 1,5 bis 8:1 angewandt.

Als besonders vorteilhaft hat es sich erwiesen, nach dem Zweikomponentenverfahren zu arbeiten und die Aufbaukomponenten (b), (d), (e) und gegebenenfalls (c) und (f) in der Komponente (A) zu vereinigen und als Komponente (B) die organischen Polyisocyanate, modifizierte Polyisocyanate (a) oder Mischungen aus den genannten Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 45°C gemischt und in das offene oder gegebenenfalls unter erhöhtem Druck in das geschlossene Formwerkzeug eingebracht. Die Formwerkzeugtemperatur beträgt zweckmäßigerweise 20 bis 110°C, vorzugsweise 30 bis 60°C und insbesondere 45 bis 55°C.

Die Formkörper mit verdichteter Randzone und zelligem Kern werden vorteilhafterweise nach dem one-shot-Verfahren, beispielsweise mit Hilfe der Hochdruck- oder Niederdruck-Technik in geschlossenen Formwerkzeugen, beispielsweise metallischen Formwerkzeugen hergestellt. Diese Verfahrensweisen werden beispielsweise beschrieben von Piechota und Röhr in "Integralschaumstoff", Carl-Hanser-Verlag, München, Wien 1975.

Die nach dem erfindungsgemäßen Verfahren hergestellten Formkörper mit verdichteter Randzone und zelligem Kern weisen eine Dichte von 0,2 bis 1,0 g/cm³, vorzugsweise von 0,3 bis 0,7 g/cm³ und insbesondere von 0,3 bis 0,55 g/cm³ auf. Sie zeichnen sich gegenüber solchen nach dem Stand der Technik, insbesondere wassergetriebenen, durch eine wesentlich bessere, störungsfreie und glatte Oberfläche aus. Es kommt zu einer deutlichen Ausbildung des zelligen Kerns und der verdichteten Randzone. Die erfindungsgemäß als Treibmittel verwendeten Acetale sind mit den übrigen Bestandteilen der Polyolkomponente gut verträglich, es kommt zu keinen Inhomogenitäten und Entmischungen.

Das erfindungsgemäße Verfahren ist sowohl für Weichintegralschäume, wie sie beispielsweise als Schuhsohlen und Autosicherheitsteile verwendet werden, als auch für Hartintegralschäume, sogenannte Duromerschäume, anwendbar.

Die erfindungsgemäßen Polyurethan-Weichschäume werden ebenfalls vorteilhafterweise nach dem one-shot-Verfahren, beispielsweise nach der Hochdruck- oder Niederdrucktechnik in geschlossenen Formwerkzeugen, beispielsweise metallischen Formwerkzeugen, hergestellt. Ebenfalls üblich ist eine drucklose Verschäumung zur Erzeugung eines Blockweichschaumes unter Vermischen der Einzelkomponenten auf einer dafür geeigneten Schäumanlage.

Die nach dem erfindungsgemäßen Verfahren hergestellten Polyurethanweichschäume weisen eine Dichte von 20 bis 100 g/l, vorzugsweise von 30 bis 50 g/l, auf. Sie zeichnen sich gegenüber den rein wassergetriebenen Weichschäumen durch einen weicheren Griff aus. Die erfindungsgemäß als Treibmittel verwendete Acetale sind mit den Systemkomponenten gut verträglich, was zu einer guten Vermischbarkeit führt.

Bei Blockweichschaumstoffen können erfindungsgemäß Dichten auch unter 20 kg/m³, vorzugsweise 15 bis 20 kg/m³, hergestellt werden, denn beim Blockschaumverfahren gelingt es, durch die beabsichtigte Verdampfung der Acetale, die Exothermie der Schaumreaktion günstig zu beeinflussen. Durch geeignete Maßnahmen ist das Entstehen zündfähiger Gemische zu unterbinden.

Ein besonderer Vorteil der erfindungsgemäßen Verwendung von Acetalen als Treibmittel für Weichschaumstoffe besteht darin, daß zum einen ein Teil der Reaktionswärme über die Verdampfung des Acetals abgeführt werden kann und zum anderen eine Dichteerniedrigung und Härteverminderung der Schaumstoffe erreicht werden kann.

Die Erfindung soll an nachfolgenden Beispielen näher erläutert werden.

### Polyurethan-Integralschäume

### Beispiel 1 (Vergleich)

100 Gew.-Teile Polyolkomponente, bestehend aus 67,40 Gew.-Teilen eines dreifunktionellen Polyetheralkohols mit einer Hydroxylzahl von 35 mg KOH/g (Lupranol® 2045 der BASF AG), 11,65 Gew.-Teilen eines zweifunktionellen Polyetheralkohols mit einer Hydroxylzahl von 29 mg KOH/g (Lupranol® 2043 der BASF AG) 13,00 Gew.-Teile eines Polymerpolyetheralkohols mit einer Hydroxylzahl von 24 mg KOH/g (Pluracol® 973 der BASF AG), 6,0 Gew.-Teilen Ethylenglycol, 1,1 Gew.-Teilen eines Aminkatalysataors (Lupragen® N 201 der BASF AG) und 0,85 Gew.-Teilen Wasser, wurden mit 56,9 Gew.-Teilen eines Prepolymeren auf Basis von Diphenylmethandiisocyanat, carbodiimidmodifiziertem Diphenylmethandiisocyanat und Polyphenylpolymethylenpolyisocyanaten mit einem NCO-Gehalt von 26,3 Gew.-% in eine verschließbare Form gegeben und reagierten zu einem Polyurethan-Integralschaum.

### Beispiel 2

100 Gew.-Teile einer Polyolkomponente, bestehend aus 66,40 Gew.-Teilen Lupranol® 2045, 11,00 Gew.-Teilen Lupranol® 2043, 13,00 Gew.-Teilen Pluracol® 973, 6,00 Gew.-Teilen Ethylenglycol, 1,1 Gew.-Teilen Lupragen® N 201, 0,60 Gew.-Teilen Wasser und 1,9 Gew.-Teilen Methylal, wurden mit 52,3 Gew.-Teilen des Prepolymeren aus Beispiel 1 wie in Beispiel 1 beschrieben umgesetzt.

### Beispiel 3

100 Gew.-Teile einer Polyolkomponente aus 63,40 Gew.-Teilen Lupranol® 2045, 11,20 Gew.-Teilen Lupranol® 2043, 13,00 Gew.-Teilen Pluracol® 973, 6,00 Gew.-Teilen Ethylenglycol, 1,1 Gew.-Teilen Lupragen® N 201, 0,40 Gew.-Teilen Wasser und 4,9 Gew.-Teilen Methylal wurden mit 48,4 Gew.-Teilen des Prepolymeren gemäß Beispiel 1 wie in Beispiel 1 beschrieben umgesetzt.

### Beispiel 4

100 Gew.-Teile einer Polyolkomponente aus 66,40 Gew.-Teilen Lupranol® 2045, 11,00 Gew.-Teilen Lupranol® 2043, 13,00 Gew.-Teilen Pluracol® 973, 6,00 Gew.-Teilen Ethylenglycol, 1,1 Gew.-Teilen Lupragen® N 201, 0,60 Gew.-Teilen Wasser, 1,60 Gew.-Teilen Methylal, 0,30 Gew.-Teilen 1,3-Dioxolan wurden mit 52,3 Gew.-Teilen des Prepolymeren gemäß Beispiel 1 wie in Beispiel 1 beschrieben umgesetzt.

### Beispiel 5

100 Gew.-Teile einer Polyolkomponente aus 65,9 Gew.-Teilen Lupranol® 2045, 11,00 Gew.-Teilen Lupranol® 2043, 13,00 Gew.-Teilen Pluracol® 973, 6,00 Gew.-Teilen Ethylenglycol, 1,1 Gew.-Teilen Lupragen® N 201, 0,60 Gew.-Teilen Wasser, 1,60 Gew.-Teilen Methylal, 0,50 Gew.-Teilen 1,3-Dioxolan und 0,3 Gew.-Teilen Dimethylacetal wurden mit 52,2 Gew.-Teilen des Prepolymeren gemäß Beispiel 1 wie in Beispiel 1 beschrieben umgesetzt.

### Beispiel 6 (Vergleich)

100 Gew.-Teile einer Polyolkomponente aus 65,9 Gew.-Teilen Lupranol® 2043, 16,3 Gew.-Teilen eines dreifunktionellen Polyetheralkohols mit einer Hydroxylzahl von 27 mg KOH/g (Lupranol® 2042 der BASF AG), 3,1 Gew.-Teilen Lupranol® 2045, 10,7 Gew.-Teilen Butandiol-1,4, 2,0 Gew.-Teilen Ethylenglykol, 1,1 Gew.-Teilen Lupragen® N201 und 0,9 Gew.-Teilen Wasser wurden mit 73,8 Gew.-Teilen des Prepolymeren gemäß Beispiel 1, wie in Beispiel 1 beschrieben, umgesetzt.

### Beispiel 7

100 Gew.-Teile einer Polyolkomponente aus 65,9 Gew.-Teilen Lupranol® 2043, 15 Gew.-Teilen Lupranol® 2042, 3,1 Gew.-Teilen Lupranol® 2045, 10,7 Gew.-Teilen Butandiol-1,4, 2,0 Gew.-Teilen Ethylenglykol, 1,1 Gew.-Teilen Lupragen® N201, 0,6 Gew.-Teilen Wasser und 1,6 Gew.-Teilen Methylal wurden mit 68,3 Gew.-Teilen des Prepolymeren gemäß Beispiel 1, wie in Beispiel 1 beschrieben, umgesetzt.

Von den Formteilen wurden die Shore-Härte nach DIN 53 505, die Rohdichte des gesamten Formteiles, der Kernzone und der Randzone nach DIN 53420 sowie die Geschlossenheit der Randzone durch mikroskopische Betrachtung ermittelt. Die Ergebnisse sind in der Tabelle 1 zusammengestellt.

**Tabelle 1**

| Bsp. | Shore-Härte | Rohdichte Kernzone [kg/m³] | Rohdichte Randzone [kg/m³] | Oberfläche |
|---|---|---|---|---|
| 1 | A 78 | 400 | 750 | unregelmäßig, Löcher |
| 2 | A 76 | 410 | 920 | glatt, geschlossen |
| 3 | A 74 | 390 | 960 | glatt, geschlossen |
| 4 | A 76 | 385 | 930 | glatt, geschlossen |
| 5 | A 74 | 405 | 900 | glatt, geschlossen |
| 6 | A 50 | 455 | 780 | unregelmäßig, Löcher |
| 7 | A 53 | 463 | 920 | glatt, geschlossen |

### Polyurethan-Blockweichschaum

### Beispiel 8 (Vergleich)

Eine Polyolkomponente, bestehend aus 100 Gew.-Teilen eines dreifunktionellen Polyetheralkohols mit einer Hydroxylzahl von 50 mg KOH/g (SYStol® T151 der Elastogran GmbH), 4,50 Gew.-Teilen Wasser, 1,30 Gew.-Teilen Silikonstabilisator BF 2370 (Firma Goldschmidt), 0,30 Gew.-Teilen Aminkatalysator Dabco® 33LV (Firma Air Products), 0,29 Gew.-Teilen Zinnoctoat und 5,00 Gew.-Teilen Treibmittel R11, wurde mit Toluylendiisocyanat (TDI) der Isomerenverteilung 2,4- : 2,6-TDI von 80:20 bei einer Kennzahl von 110 innig vermischt und in einem Karton mit den Abmessungen 400x400x400 mm verschäumt.

### Beispiel 9

Eine Polyolkomponente, bestehend aus 100 Gew.-Teilen SYStol® T151, 4,50 Gew.-Teilen Wasser, 1,40 Gew.-Teilen Silikonstabilisator BS 2370, 0,33 Gew.-Teilen Dabco® 33LV, 0,38 Gew.-Teilen Zinnoctoat und 5,00 Gew.-Teilen Methylal, wurde mit TDI 80/20 wie in Beispiel 8 beschrieben verschäumt.

### Beispiel 10

Eine Polyolkomponente, bestehend aus
100 Gew.-Teilen SYStol® T151, 4,50 Gew.-Teilen Wasser, 1,50 Gew.-Teilen Silikonstabilisator BS 2370, 0,60 Gew.-Teilen Dabco® 33LV, 0,80 Gew.-Teilen Zinnoctoat und 10,00 Gew.-Teilen Methylal, wurde mit TDI 80/20 wie in Beispiel 8 beschrieben verschäumt.

Von den nach den Beispielen 8 bis 10 hergestellten Polyurethan-Weichschaumstoffen wurden die Rohdichte nach DIN 53420, die Stauchhärte nach DIN 53577, der Druckverformungsrest nach DIN 53572 und die Rückprallelastizität nach DIN 53573 bestimmt.

Die Ergebnisse sind in Tabelle 2 festgehalten.

**Tabelle 2**

| Beispiel | Rohdichte [kg/m³] | Stauchhärte [kPa] | Druckverformungsrest (50%/70°C/22h) [%] | Rückprallelastizität [%] |
|---|---|---|---|---|
| 8 (V) | 18,8 | 2,9 | 6,1 | 43,1 |
| 9 | 17,8 | 2,5 | 3,0 | 44,9 |
| 10 | 15,7 | 1,7 | 4,5 | 44,5 |

### Polyurethan-Formweichschaum

### Beispiel 11 (Vergleich)

100 Gew.-Teile einer Polyolkomponente, bestehend aus 85,55 Gew.-Teilen Lupranol® 2045, 10,00 Gew.-Teilen Pluracol® 973,
0,40 Gew.-Teilen Dimethylaminopropylamin, 0,20 Gew.-Teilen Dabco® 33 LV, 0,15 Gew.-Teilen des Silikonstabilisators Tegostab B 8631 (Fa. Goldschmidt) und 3,70 Gew.-Teilen Wasser, wurden mit 72 Gew.-Teilen eines Prepolymeren auf Basis von Diphenylmethandiisocyanat und Polyphenylpolymethylenpolyisocyanaten mit einem NCO-Gehalt von 27,5 Gew.-% intensiv vermischt und in eine verschließbare Prüfform mit einem Nenninhalt von 14,5 1 eingebracht.

### Beispiel 12

100 Gew.-Teile einer Polyolkomponente, bestehend aus 84,25 Gew.-Teilen Lupranol® 2045, 10,00 Gew.-Teilen Pluracol® 973, 0,40 Gew.-Teilen Dimethylaminopropylamin, 0,20 Gew.-Teilen Dabco® 33LV, 0,15 Gew.-Teilen Tegostab B 8631, 3,0 Gew.-Teilen Wasser und 2,00 Gew.-Teilen Methylal, wurden mit 60 Gew.-Teilen eines Prepolymeren wie in Beispiel 11 umgesetzt.

Die Ergebnisse sind in Tabelle 3 dargestellt.

**Tabelle 3**

| Beispiel | Rohdichte [kg/m³] | Stauchhärte [kPa] | Eindruckhärte [N] | Druckverformungsrest (50%/70°C/22h) [%] | Hysterese [%] |
|---|---|---|---|---|---|
| 11 | 40 | 4,8 | 320 | 6,5 | 26,9 |
| 12 | 40 | 3,4 | 210 | 5,1 | 22,2 |

Durch die anteilige Verwendung von Methylal konnte die Rohdichte gesenkt bzw. bei Beibehaltung der Rohdichte ein weicherer Schaum erzielt werden.

## Patentansprüche

1. Verfahren zur Herstellung von zelligen Polyurethanen durch Umsetzung von
a) mindestens einem organischen und/oder modifizierten Polyisocyanat,
b) mindestens einer Verbindung mit mindestens zwei reaktiven Wasserstoffatomen und einem MOlekulargewicht von 300 bis 10000, gegebenenfalls
c) Kettenverlängerungs- und/oder Vernetzungsmitteln mit einem Molekulargewicht von 60 bis 300
in Gegenwart von
d) Treibmitteln,
e) Katalysatoren sowie gegebenenfalls
f) Hilfsmitteln und/oder Zusatzstoffen,
dadurch gekennzeichnet, daß als Treibmittel d) mindestens ein Acetal verwendet wird.

2. Verfahren zur Herstellung von Polyurethanformkörpern mit einer verdichteten Randzone und einem zelligen Kern durch Umsetzung von
a) mindestens einem organischen und/oder modifizierten Polyisocyanat,
b) mindestens einer Verbindung mit mindestens zwei reaktiven Wasserstoffatomen und einem Molekulargewicht von 300 bis 10000, gegebenenfalls
c) Kettenverlängerungs- und/oder Vernetzungsmitteln mit einem Molekulargewicht von 60 bis 100
in Gegenwart von
d) Treibmitteln,
e) Katalysatoren sowie gegebenenfalls
f) Hilfsmitteln und/oder Zusatzstoffen,
dadurch gekennzeichnet, daß als Treibmittel d) mindestens ein Acetal verwendet wird.

3. Verfahren zur Herstellung von Polyurethan-Weichschaumstoffen durch Umsetzung von
a) mindestens einem organischen und/oder modifizierten Polyisocyanat,
b) mindestens einer Verbindung mit mindestens zwei reaktiven Wasserstoffatomen und einem Molekulargewicht von 300 bis 10000, gegebenenfalls
c) niedermolekularen Kettenverlängerungs- und/oder Vernetzungsmitteln mit einem Molekulargewicht von 60 bis 300
in Gegenwart von
d) Treibmitteln,
e) Katalysatoren sowie gegebenenfalls
f) Hilfsmitteln und/oder Zusatzstoffen,
dadurch gekennzeichnet, daß als Treibmittel d) mindestens ein Acetal verwendet wird.

4. Verfahren nach einem der Ansprüche 1 bis 3, dadurch gekennzeichnet, daß die Acetale in einer Menge von 0,1 bis 20 Gew.-%, bezogen auf das Gewicht der Komponenten a) bis f), eingesetzt werden.

5. Verfahren nach einem der Ansprüche 1 bis 4, dadurch gekennzeichnet, daß die Acetale in einer Menge von 0,2 bis 8 Gew.-%, bezogen auf das Gewicht der Komponenten a) bis f), eingesetzt werden.

6. Verfahren nach einem der Ansprüche 1 bis 5, dadurch gekennzeichnet, daß die Acetale einen Siedepunkt von 40 bis 140°C aufweisen.

7. Verfahren nach einem der Ansprüche 1 bis 6, dadurch gekennzeichnet, daß die Acetale einen Siedepunkt von 40 bis 120°C aufweisen.

8. Verfahren nach einem der Ansprüche 1 bis 7, dadurch gekennzeichnet, daß die Acetale einen Siedepunkt von 40 bis 90°C aufweisen.

9. Verfahren nach einem der Ansprüche 1 bis 8, dadurch gekennzeichnet, daß die Acetale ausgewählt werden aus der Gruppe, enthaltend Methylal, Diethoxyethan, Diethoxymethan, Dimethoxyethan, 1,3-Dioxolan, 2-Methyl-1,3-dioxolan.

10. Verfahren nach einem der Ansprüche 1 bis 9, dadurch gekennzeichnet, daß als Acetal Methylal eingesetzt wird.

11. Verfahren nach einem der Ansprüche 1 bis 10, dadurch gekennzeichnet, daß als Treibmittel ein Gemisch aus mindestens einem Acetal und üblichen Cotreibmitteln eingesetzt wird.

12. Verfahren nach Anspruch 11, dadurch gekennzeichnet, daß als Treibmittel ein Gemisch aus mindestens einem Acetal und Wasser eingesetzt wird.

13. Verfahren nach Anspruch 11 oder 12, dadurch gekennzeichnet, daß als Treibmittel ein Gemisch aus 0,05 bis 20 Gew.-% mindestens eines Acetals und 0,1 bis 5 Gew.-% Wasser, bezogen auf das Gewicht der Komponenten a) bis f), eingesetzt wird.

14. Verfahren nach Anspruch 11, dadurch gekennzeichnet, daß als Treibmittel ein Gemisch aus mindestens einem Acetal und mindestens einem aliphatischen und/oder cycloaliphatischen Kohlenwasserstoff eingesetzt wird.

15. Verfahren nach Anspruch 11 oder 14, dadurch gekennzeichnet, daß als Treibmittel ein Gemisch aus 0,1 bis 20 Gew.-% mindestens eines Acetals und 0,1 bis 15 Gew.-% mindestens eines aliphatischen und/oder cycloaliphatischen Kohlenwasserstoffs, bezogen auf das Gewicht der Komponenten a) bis f), eingesetzt wird.

16. Verfahren nach Anspruch 11, dadurch gekennzeichnet, daß als Treibmittel ein Gemisch aus mindestens einem Acetal und mindestens einem teilhalogenierten Kohlenwasserstoff eingesetzt wird.

17. Verfahren nach Anspruch 11 oder 16, dadurch gekennzeichnet, daß als Treibmittel ein Gemisch aus 0,1 bis 20 Gew.-% mindestens eines Acetals und 0,1 bis 15 Gew.-% mindestens eines teilhalogenierten Kohlenwasserstoffs, bezogen auf das Gewicht der Komponenten a) bis f), eingesetzt wird.

## Claims

1. A process for the preparation of cellular polyurethanes by reacting
a) at least one organic and/or modified organic polyisocyanate,
b) at least one compound containing at least two reactive hydrogen atoms and having a molecular weight of from 300 to 10,000, if desired
c) chain extenders and/or crosslinking agents having a molecular weight of from 60 to 300,
in the presence of
d) blowing agents,
e) catalysts, and, if desired,
f) auxiliaries and/or additives,
wherein the blowing agent d) is at least one acetal.

2. A process for the preparation of polyurethane moldings having a compacted peripheral zone and a cellular core by reacting
a) at least one organic and/or modified organic polyisocyanate,
b) at least one compound containing at least two reactive hydrogen atoms and having a molecular weight of from 300 to 10,000, if desired
c) chain extenders and/or crosslinking agents having a molecular weight of from 60 to 100,
in the presence of
d) blowing agents,
e) catalysts, and, if desired,
f) auxiliaries and/or additives,
wherein the blowing agent d) is at least one acetal.

3. A process for the preparation of flexible polyurethane foams by reacting
a) at least one organic and/or modified organic polyisocyanate,
b) at least one compound containing at least two reactive hydrogen atoms and having a molecular weight of from 300 to 10,000, if desired
c) chain extenders and/or crosslinking agents having a molecular weight of from 60 to 300,
in the presence of
d) blowing agents,
e) catalysts, and, if desired,
f) auxiliaries and/or additives,
wherein the blowing agent d) is at least one acetal.

4. A process as claimed in any of claims 1 to 3, wherein the acetals are employed in an amount of from 0.1 to 20% by weight, based on the weight of components a) to f).

5. A process as claimed in any of claims 1 to 4, wherein the acetals are employed in an amount of from 0.2 to 8% by weight, based on the weight of components a) to f).

6. A process as claimed in any of claims 1 to 5, wherein the acetals have a boiling point of from 40 to 140°C.

7. A process as claimed in any of claims 1 to 6, wherein the acetals have a boiling point of from 40 to 120°C.

8. A process as claimed in any of claims 1 to 7, wherein the acetals have a boiling point of from 40 to 90°C.

9. A process as claimed in any of claims 1 to 8, wherein the acetals are selected from the group consisting of methylal, diethoxyethane, diethoxymethane, dimethoxyethane, 1,3-dioxolane and 2-methyl-1,3-dioxolane.

10. A process as claimed in any of claims 1 to 9, wherein the acetal employed is methylal.

11. A process as claimed in any of claims 1 to 10, wherein the blowing agent employed is a mixture of at least one acetal and conventional co-blowing agents.

12. A process as claimed in claim 11, wherein the blowing agent employed is a mixture of at least one acetal and water.

13. A process as claimed in claim 11 or 12, wherein the blowing agent employed is a mixture of from 0.05 to 20% by weight of at least one acetal and from 0.1 to 5% by weight of water, based on the weight of components a) to f).

14. A process as claimed in claim 11, wherein the blowing agent employed is a mixture of least one acetal and at least one aliphatic and/or cycloaliphatic hydrocarbon.

15. A process as claimed in claim 11 or 14, wherein the blowing agent employed is a mixture of from 0.1 to 20% by weight of at least one acetal and from 0.1 to 15% by weight of at least one aliphatic and/or cycloaliphatic hydrocarbon, based on the weight of components a) to f).

16. A process as claimed in claim 11, wherein the blowing agent employed is a mixture of at least one acetal and at least one partially halogenated hydrocarbon.

17. A process as claimed in claim 11 or 16, wherein the blowing agent employed is a mixture of from 0.1 to 20% by weight of at least one acetal and from 0.1 to 15% by weight of at least one partially halogenated hydrocarbon, based on the weight of components a) to f).

## Revendications

1. Procédé pour la préparation de polyuréthannes cellulaires, par mise en réaction de
a) au moins un polyisocyanate organique et/ou modifié,
b) au moins un composé contenant au moins deux atomes d'hydrogène réactifs et possédant un poids moléculaire de 300 à 10000, le cas échéant
c) des agents d'allongement de chaînes et/ou de réticulation possédant un poids moléculaire de 60 à 300
en présence de
d) des agents moussants,
e) des catalyseurs, ainsi que le cas échéant
f) des adjuvants et/ou des additifs,
caractérisé en ce qu'on utilise, à titre d'agent moussant d), au moins un acétal.

2. Procédé pour la préparation de corps moulés de polyuréthanne possédant une zone marginale comprimée et une partie centrale cellulaire, par mise en réaction de
a) au moins un polyisocyanate organique et/ou modifié,
b) au moins un composé contenant au moins deux atomes d'hydrogène réactifs et possédant un poids moléculaire de 300 à 10000, le cas échéant
c) des agents d'allongement de chaînes et/ou de réticulation possédant un poids moléculaire de 60 à 100
en présence de
d) des agents moussants,
e) des catalyseurs, ainsi que le cas échéant
f) des adjuvants et/ou des additifs,
caractérisé en ce qu'on utilise, à titre d'agent moussant d) au moins un acétal.

3. Procédé pour la préparation de mousses tendres de polyuréthanne, par mise en réaction de
a) au moins un polyisocyanate organique et/ou modifié,
b) au moins un composé contenant au moins deux atomes d'hydrogène réactifs et possédant un poids moléculaire de 300 à 10000, le cas échéant
c) des agents d'allongement de chaînes et/ou de réticulation à bas poids moléculaire possédant un poids moléculaire de 60 à 300
en présence de
d) des agents moussants,
e) des catalyseurs, ainsi que le cas échéant
f) des adjuvants et/ou des additifs,
caractérisé en ce qu'on utilise, à titre d'agent moussant d) au moins un acétal.

4. Procédé selon l'une quelconque des revendications 1 à 3, caractérisé en ce qu'on met en oeuvre les acétals en une quantité de 0,1 à 20% en poids rapportés au poids des composants a) à f).

5. Procédé selon l'une quelconque des revendications 1 à 4, caractérisé en ce qu'on met en oeuvre les acétals en une quantité de 0,2 à 8% en poids rapportés au poids des composants a) à f).

6. Procédé selon l'une quelconque des revendications 1 à 5, caractérisé en ce que les acétals présentent un point d'ébullition de 40 à 140°C.

7. Procédé selon l'une quelconque des revendications 1 à 6, caractérisé en ce que les acétals présentent un point d'ébullition de 40 à 120°C.

8. Procédé selon l'une quelconque des revendications 1 à 7, caractérisé en ce que les acétals présentent un point d'ébullition de 40 à 90°C.

9. Procédé selon l'une quelconque des revendications 1 à 8, caractérisé en ce qu'on choisit les acétals parmi le groupe comprenant le méthylal, le diéthoxyéthane, le diéthoxyméthane, le diméthoxyéthane, le 1,3-dioxolane, le 2-méthyl-1,3-dioxolane.

10. Procédé selon l'une quelconque des revendications 1 à 9, caractérisé en ce qu'on met en oeuvre, à titre d'acétal, le méthylal.

11. Procédé selon l'une quelconque des revendications 1 à 10, caractérisé en ce qu'on met en oeuvre, à titre d'agent moussant, un mélange constitué par au moins un acétal et par des coagents moussants habituels.

12. Procédé selon la revendication 11, caractérisé en ce qu'on met en oeuvre, à titre d'agent moussant, un mélange constitué par au moins un acétal et de l'eau.

13. Procédé selon la revendication 11 ou 12, caractérisé en ce qu'on met en oeuvre, à titre d'agent moussant, un mélange constitué, à concurrence de 0,05 à 20% en poids, par au moins un acétal et, à concurrence de 0,1 à 5% en poids, par de l'eau, rapportés au poids des composants a) à f).

14. Procédé selon la revendication 11, caractérisé en ce qu'on met en oeuvre, à titre d'agent moussant, un mélange constitué par au moins un acétal et par au moins un hydrocarbure aliphatique et/ou cycloaliphatique.

15. Procédé selon la revendication 11 ou 14, caractérisé en ce qu'on met en oeuvre, à titre d'agent moussant, un mélange constitué, à concurrence de 0,1 à 20% en poids, par au moins un acétal et, à concurrence de 0,1 à 15% en poids, par au moins un hydrocarbure aliphatique et/ou cycloaliphatique, rapportés au poids des composants a) à f).

16. Procédé selon la revendication 11, caractérisé en ce qu'on met en oeuvre, à titre d'agent moussant, un mélange constitué par au moins un acétal et par au moins un hydrocarbure partiellement halogéné.

17. Procédé selon la revendication 11 ou 16, caractérisé en ce qu'on met en oeuvre, à titre d'agent moussant, un mélange constitué, à concurrence de 0,1 à 20% en poids, par au moins un acétal et, à concurrence de 0,1 à 15% en poids, par au moins un hydrocarbure partiellement halogéné, rapportés au poids des composants a) à f).
